# EUROPÄISCHE PATENTSCHRIFT

(11) **EP 0 922 347 B1**
(45) Veröffentlichungstag und Bekanntmachung des Hinweises auf die Patenterteilung: **12.07.2000**
(21) Anmeldenummer: 97953698.4
(22) Anmeldetag: 25.11.1997
(51) Int. Cl.: H04L 9/32

(54) **VERFAHREN ZUM ERFASSEN EINER AN EINER DIGITALEN INFORMATION AUSGEÜBTEN MANIPULATION**
PROCESS FOR SENSING MANIPULATIONS OF DIGITAL INFORMATION
PROCEDE POUR DETECTER DES MANIPULATIONS D'INFORMATIONS NUMERIQUES

(30) Priorität: 21.01.1997 DE 19701939
(43) Veröffentlichungstag der Anmeldung: 16.06.1999
(73) Patentinhaber: FRAUNHOFER-GESELLSCHAFT ZUR FÖRDERUNG DER ANGEWANDTEN FORSCHUNG E.V., 80636 München (DE)
(72) Erfinder: ZELLER, Jürgen, D-85737 Ismaning (DE); GERHÄUSER, Heinz, D-91344 Waischenfeld (DE)
(74) Vertreter: Schoppe, Fritz, Dipl.-Ing.
(86) Internationale Anmeldenummer: EP9706575
(87) Internationale Veröffentlichungsnummer: WO9832261

(56) Entgegenhaltungen:
- EP-A- 0 676 877
- EP-A- 0 752 786
- GERBERICK D: "WORKING PAPER OVER FUNCTIONAL SPECIFICATIONS FOR AN EDI CRYPTOSEVER" SIGSAC REVIEW, Bd. 9, Nr. 3, 1.Januar 1991, NEW-YORK, US, Seiten 11-19, XP000329287
- S.M MATYAS: "Digital Signature for identifying message and sender" IBM TECHNICAL DISCLOSURE BULLETIN, 12.Mai 1978, NEW-YORK, US, Seiten 52455245-5247, XP002064115

## Beschreibung

Die vorliegende Erfindung befaßt sich mit einem Verfahren zum Erfassen einer an einer digitalen Information ausgeübten Manipulation. In einem Anwendungsfall befaßt sich die Erfindung mit dem Gebiet der Sicherheitstechnik durch Videoüberwachung, wobei eine Manipulation der Videoaufnahmen des überwachten Objektes erkannt werden soll.

Im Bereich der Sicherheitstechnik ist es bekannt, zu schützende Objekte durch Videoüberwachung zu sichern. Hierbei wird üblicherweise eine Sequenz von Videobildern von dem überwachten Objekt über eine geeignete Datenfernübertragung an eine Überwachungszentrale übertragen. Eine derartige Videoüberwachung kann nur dann gegen Manipulationen geschützt sein, wenn verhindert wird, daß in unerkannter Weise unberechtigte Personen eine Manipulation der übertragenen Videoinformation in der Weise vornehmen, daß sie beispielsweise anstelle der momentan zu übertragenden Videoinformation eine an einem anderen Ort und/oder zu einer anderen Zeit aufgenommene Videoinformation verwenden und an die Überwachungszentrale übertragen. Um derartige plumpe Manipulationsmaßnahmen zu vermeiden, ist es bereits bekannt, die Videoinformation zusammen mit einer geeigneten Kennzeichnung zu übertragen. Ein Beispielsfall einer derartigen Kennzeichnung ist die an sich bekannte sogenannte "elektronische Unterschrift", wobei es sich bei der elektronischen Unterschrift um Kennzeichnungen handelt, die aus dem Gesamtbildinhalt der zu prüfenden Videoinformation mittels eines Schlüssels gewonnen werden, wobei am Ort der Sicherungszentrale mittels eines geeigneten weiteren Schlüssels aus dem empfangenen Gesamtvideobildinhalt wiederum Daten abgeleitet werden, die für den Fall, daß keine Manipulation stattfand, mit der elektronischen Unterschrift übereinstimmen. Eine derartige Vorgehensweise ermöglicht zwar die Erkennung einer Manipulation innerhalb der übertragenen Videoinformation oder allgemein innerhalb einer verarbeiteten digitalen Information, ist jedoch extrem anfällig gegenüber jeglichen Störungen bei der Bearbeitung, und insbesondere gegenüber Störungen bei der Übertragung der Videoinformation in dem oben genannten Spezialfall der Videoüberwachung. Schon die Störung der Übertragung eines einzelnen Bildpunktes führt bei dieser Technik zur Einstufung der Unterschrift der bearbeiteten bzw. empfangenen Gesamtinformation als ungültig, so daß die bearbeitete bzw. empfangene digitale Gesamtinformation in nicht zutreffender Weise als manipuliert eingestuft wird.

Ähnliche Probleme ergeben sich nicht nur auf dem Gebiet der Sicherung von Videosequenzen gegen Manipulation auf dem Gebiet der Sicherheitstechnik, um Manipulationen auf dem Übertragungsweg der Videoinformation zu erkennen, sondern allgemein bei jeglicher Sicherung einer digitalen Information gegenüber Manipulationen bei ihrer Bearbeitung unter Verwendung einer elektronischen Kennzeichnung, beispielsweise in Form der sogenannten digitalen oder elektronischen Unterschrift, die aus dem Gesamtinhalt der Information abgeleitet wird, wenn Störungen einzelner Bits bei der Bearbeitung auftreten. Derartige Störungen führen bei dem Konzept der digitalen Unterschrift regelmäßig zu einer Fehleinstufung der bearbeiteten Information als manipuliert.

Die EP 0 752 786 A offenbart ein Verfahren und eine Vorrichtung zum Überprüfen der Authentizität von übertragenen Anwendungen in einem interaktiven Informationssystem. Ein ausführbares interaktives Programm wird mit Audio/Video-Daten zur Übertragung kombiniert. Das Programm ist in Module unterteilt, wobei ein Verzeichnismodul erzeugt wird, das die Programmodule verbindet. Zur Datensicherheit wird eine unterzeichnete Bescheinigung zu den jeweiligen Verzeichnismodulen hinzugefügt. Die Integrität der jeweiligen Module wird überwacht, indem jeweilige Module einer Hash-Codierung unterworfen werden, und indem die jeweiligen Hash-Werte in das Verzeichnismodul aufgenommen werden. Ein Hash-Wert des Verzeichnismoduls, das die anderen Hash-Werte enthält, wird erzeugt, verschlüsselt und an das Verzeichnismodul angehängt. Ein Empfänger decodiert die Bescheinigung und überprüft sie bezüglich der Authentizität des Lieferanten.

Ausgehend von diesem Stand der Technik liegt der vorliegenden Erfindung die Aufgabe zugrunde, ein Verfahren zum Erfassen einer an einer digitalen Information ausgeübten Manipulation mittels einer Kennzeichnung so weiterzubilden, daß eine fehlerhafte Einstufung der Information als manipuliert im Falle des Auftretens von Störungen bei einer Bearbeitung verhindert wird oder zumindest seltener auftritt.

Diese Aufgabe wird durch ein Verfahren gemäß Patentanspruch 1 gelöst.

Die Erfindung schafft ein Verfahren zum Erfassen einer an einer digitalen Information ausgeübten Manipulation mittels einer Kennzeichnung, mit folgenden Verfahrensschritten:
- Unterteilen der Information in Teilinformationen einer derart gewählten Datenmenge, daß die Wahrscheinlichkeit des Auftretens eines Fehlers bei der beabsichtigten Bearbeitung dieser Teilinformationen hinnehmbar gering ist;
- Ableiten je einer Kennzeichnung von jeder Teilinformation;
- Zuordnen der Kennzeichnung zur jeweiligen Teilinformation;
- Bearbeiten der Teilinformationen zusammen mit ihren Kennzeichnungen; und
- Ermitteln von potentiell manipulierten Teilinformationen aufgrund ihrer Kennzeichnungen.

Gemäß einem ersten Aspekt der Erfindung umfaßt das Verfahren folgenden Verfahrensschritt nach dem Verfahrensschritt des Ermittelns von potentiell manipulierten Teilinformationen:
- Einstufen der Information als manipuliert, wenn wenigstens zwei zeitlich oder örtlich korrelierte Teilinformationen als potentiell manipuliert ermittelt wurden.

Gemäß einem zweiten Aspekt der Erfindung umfaßt das Verfahren folgenden Verfahrensschritt nach dem Verfahrensschritt des Ermittelns von potentiell manipulierten Teilinformationen:
- Wiedergeben der als nicht potentiell manipuliert ermittelten und der als potentiell manipuliert ermittelten Teilinformationen in der Weise, daß aus der Wiedergabe die zeitliche oder örtliche Korrelation der als manipuliert ermittelten Teilinformationen erkannt werden kann, um der Bedienungsperson im Falle der zeitlichen oder örtlichen Korrelation der als manipuliert ermittelten Teilinformationen das Erkennen der Gesamtinformation als manipuliert zu ermöglichen.

Der Erfindung liegt der Gedanke zugrunde, sich von der im Stand der Technik üblichen Ableitung einer elektronischen Unterschrift von der zu überprüfenden Gesamtinformation zu trennen, und zunächst die Gesamtinformation in Teilinformationen zu unterteilen, von denen jeweils eine individuelle Kennzeichnung abgeleitet wird, die diesen Teilinformationen zugeordnet wird, wobei nach Bearbeitung der Teilinformationen und ihrer Kennzeichnungen beispielsweise in Form einer Übertragung derselben potentiell manipulierte Teilinformationen aufgrund nicht zu diesen passender Kennzeichnungen, insbesondere aufgrund als ungültig erkannter Unterschriften zu den Teilinformationen ermittelt werden. Somit unterteilt das erfindungsgemäße Verfahren die zu überprüfende Gesamtinformation in als gültig eingestufte Teilinformationen und als potentiell manipuliert eingestufte Teilinformationen. Hierdurch ermöglicht die Erfindung erstmals, durch die zeitliche Korrelation oder örtliche Korrelation der als potentiell manipuliert ermittelten Teilinformationen eine automatische Ermittlung oder Ermittlung durch einen Betrachter eines Auswertungssystemes vorzunehmen, die darauf abzielt, zeitlich oder örtlich unkorrelierte potentiell manipulierte Teilinformationen als unmanipuliert einer insgesamt unmanipulierten Gesamtinformation zuzuordnen, während bei einer zeitlichen oder örtlichen Korrelation der als potentiell manipuliert ermittelten Teilinformationen die Gesamtinformation als manipuliert erfaßt wird.

Das erfindungsgemäße Konzept geht davon aus, daß die durch Übertragungsfehler oder sonstige Bearbeitungsfehler auftretenden Störungen in der Information statistisch auftreten und somit zeitlich bzw. örtlich nicht korreliert sind, wohingegen bei einem bewußten Manipulieren eines Informationsinhaltes zumeist sowohl eine zeitliche als auch eine örtliche Korrelation der Teilinformationen zueinander besteht, die manipuliert sind.

Im Falle eines Videobildes wird zumindest ein Bildbereich, der mehrere Teilvideobilder umfaßt, gleichzeitig für die Dauer von mehreren Videobildern manipuliert werden müssen, um beispielsweise im Falle der Sicherheitsüberwachung einen bestimmten unerlaubten Vorgang am überwachten Objekt nicht zur Sicherheitszentrale übermitteln zu lassen. In diesem Fall ist es möglich, bei der Darstellung des überwachten Objekts in der Sicherheitszentrale die als potentiell manipuliert ermittelten Teilbildbereiche optisch zu markieren, so daß der Betrachter des Bildes aus dem örtlichen Zusammenhang oder der Nachbarschaft der optisch hervorgehobenen, potentiell manipulierten Videobildbereiche den Manipulationseingriff in das Videobild erkennt, und ohne Probleme von einer nur statistisch auftretenden Störung unterscheiden kann.

Selbstverständlich ist es auch möglich, die zeitliche und/oder örtliche Korrelation der als potentiell manipuliert eingestuften Teilinformationen automatisch zu ermitteln und somit eine geeignete Manipulationsstörungsmeldung herbeizuführen.

Als Kennzeichnung, die den jeweiligen Teilinformationen zugeordnet wird, kann beim Gegenstand der Erfindung eine digitale bzw. elektronische Unterschrift verwendet werden, die aus dem Informationsinhalt der Teilinformation mittels eines Schlüssels, vorzugsweise mittels eines privaten Schlüssels (private key) durch Verschlüsselung abgeleitet wird.

Nach der Bearbeitung der Teilinformation kann zur Ermittlung, ob oder ob nicht die Teilinformation als potentiell manipuliert einzustufen ist, diese mittels eines entsprechenden Schlüssels, vorzugsweise eines sogenannten öffentlichen Schlüssels (public key) entschlüsselt werden, um dann die Gültigkeit oder Ungültigkeit der zur Teilinformation zugeordneten digitalen Unterschrift zu ermitteln. Derartige Verschlüsselungstechniken und Entschlüsselungstechniken sind im Stand der Technik an sich im Zusammenhang mit der sogenannten digitalen Unterschrift bekannt.

Eine erhöhte Sicherheit kann bei der Erfindung dadurch erreicht werden, daß die den Teilinformationen zugeordnete Kennzeichnung zusätzlich eine Hilfskennzeichnung aufweist. Die Hilfskennzeichnung kann eine Zeitinformation oder Ortsinformation sein. Die Zeitinformation kann beispielsweise von einer internen Uhr einer Videokamera im Beispielsfall der Anwendung der Erfindung auf die Videofernüberwachung geliefert werden. Für diesen Anwendungsfall muß die interne Uhr der Videokamera bei Herstellung oder Installation der Kamera genau eingestellt werden, wobei die Uhr so ausgeführt ist, daß eine Korrektur der Uhrzeit im Sinne einer Eichung von nur wenigen Sekunden innerhalb eines Zeitraumes von beispielsweise einem halben Jahr ermöglicht wird. Durch Vergleich der Uhrzeitdaten der Videokamerauhr mit einer zeitgleich geeichten Uhr am Empfängerort wird eine erhöhte Manipulationssicherheit erreicht.

Auch ist es möglich, als Hilfsinformation eine Ortsinformation zu verwenden, die beispielsweise durch die GPS-Ortungstechnik geliefert wird.

Bei einer vorteilhaften Ausgestaltung der Anwendung des erfindungsgemäßen Verfahrens auf die bereits erörterte Videoüberwachungstechnik wird folgendermaßen vorgegangen:

Im Gegensatz zum Stand der Technik wird eine elektronische Unterschrift nicht einer Sequenz von Videobildern, sondern jeweils einem Teilbereich des Videobildes zugeordnet, wie dies bereits erläutert wurde, wobei diese elektronische Unterschrift ferner mit einem sogenannten Zeitstempel und einem Ortsstempel, also den erörterten Hilfsinformationen über Zeit und Ort ergänzt wird.

Vorzugsweise wird für jedes Bild für einen Block von 16 x 16 Bildpunkten eine DCT (diskrete Cosinustransformation) zur Ermittlung entsprechender Koeffizienten gerechnet. Hierbei wird eine Rundung angewendet, so daß nur niederfrequente Anteile erhalten bleiben und diese nur noch mit der halben ursprünglichen Auflösung gebildet werden. Für jeweils einen Block von 4 x 4 der durch die DCT errechneten Koeffizienten wird eine Unterschrift erzeugt und zusammen mit diesem Koeffizientenblock übertragen. Durch diese Aufteilung ergibt sich eine Unterteilung des gesamten Videobildes in 6336 Teilbildbereiche. Für jeden dieser Teilbildbereiche wird empfangsseitig anhand der Unterschrift zu dem genannten Koeffizientenblock ermittelt, ob eine potentielle Manipulation vorliegt. Tritt nun beispielsweise gleichzeitig in mehreren benachbarten Teilbildbereichen oder in mehreren aufeinanderfolgenden Teilbildbereichen eine Ermittlung einer potentiellen Manipulation auf, so kann von der Gesamtmanipulation des Bildinhalts ausgegangen werden. Andererseits führt die typische Fehlerquote nur noch in einem statistisch nicht mehr relevanten Umfang zu einer Einstufung des Gesamtvideobildes als manipuliert, was anhand folgender Zahlen nachvollziehbar ist: bei einer Aufnahmezeit von einer Stunde wird eine Übertragung über einen Übertragungskanal mit einer Bit-Fehlerwahrscheinlichkeit von le-8 angenommen. Es sei angenommen, daß die Übertragung in einem komprimierten Videoformat mit einer Datenrate von 2 MBit/s erfolgt. Bei der angegebenen Bitfehlerrate sind innerhalb einer Stunde Videoaufzeichnung etwa 38 fehlerhafte Bits zu erwarten. Eine Unterschrift des gesamten Dokuments, also der einstündigen Videoaufzeichnung, würde mit hoher Wahrscheinlichkeit immer als ungültig eingestuft werden, während es praktisch ausgeschlossen werden kann, daß die 38 Übertragungsfehler zeitlich oder örtlich korreliert auf ein einziges Videobild oder wenige Videobilder in einer Sequenz entfallen.

Vorzugsweise wird den Teilinformationen jeweils ein Gewichtungsfaktor zugeordnet, der den Grad der zulässigen Fehlerhaftigkeit der bearbeiteten Teilinformation angibt, wobei bei Überschreiten dieser Teilinformation-spezifischen Fehlerhaftigkeit diese Teilinformation als potentiell manipuliert eingestuft wird. Der Gewichtungsfaktor wird im Beispielsfall des Videobildes nach der Wichtigkeit der Teilinformation gewählt. Handelt es sich beispielsweise bei dem Inhalt des Teilvideobildes um eine Kontonummer, so wird der Gewichtungsfaktor derart gewählt, daß keine Fehlerhaftigkeit zulässig ist. Handelt es sich hingegen bei der Teilinformation z.B. um das Photo einer Person, der das Konto gehört, so wird eine relativ tolerante Fehlerhaftigkeit gewählt.

Das erfindungsgemäße Verfahren wurde beispielshaft unter Bezugnahme auf die Sicherheits-Videoüberwachungstechnik erläutert.

Für den Fachmann ist es offenkundig, daß die gegen Manipulation zu sichernde Information nicht auf Videoüberwachungstechnik beschränkt ist, sondern jegliche zu bearbeitende Information sein kann, bei der innerhalb der Überarbeitung ein Schutz gegen Manipulation erforderlich ist. So kann beispielsweise die Information der Inhalt eines Buches sein. In diesem Fall erfordert das erfindungsgemäße Verfahren die Erzeugung der Kennung nicht aufgrund des Gesamtinhalts des Buchs, sondern jeweils aufgrund des Inhalts eines Absatzes eines Kapitels des Buches. Hierbei kann der Text ausgehend von seiner ursprünglichen Darstellung in eine formatfreie Darstellung umgewandelt werden, also beispielsweise in die Form eines ASCII-Textes ohne Punktation, ohne Groß/Klein-Schreibung, ohne Absätze etc., innerhalb dessen die einzelnen Worte nur noch durch ein einziges Leerzeichen getrennt werden.

Hier ist es möglich, die Menge der zu unterschreibenden Information zu verringern. Dies kann erforderlich sein, wenn nur eine begrenzte Rechnerkapazität zur Verfügung steht, wie dies in der Praxis häufig der Fall ist.

So kann beispielsweise bei einem reinen ASCII-Text vor der Übertragung jeder zweite Buchstabe eines Wortes unter der Bedingung entfernt werden, daß es kein zweites Wort mit dem gleichen Wortstamm gibt, welches die gleiche Abkürzung enthält. Diese Textreduktion kann als analog zu der beschriebenen Mengenanpassung im Bereich der Videotechnik angesehen werden, bei der die DCT-Koeffizienten jeweils durch 4 geteilt werden, um pro Koeffizient zwei Bitspeicherplätze zu sparen. Es ist offenkundig, daß eine solche Reduktion der DCT-Koeffizienten eine vergröberte Ortsfrequenzdarstellung bedeutet, also das Bild im Ortsbereich gröber wird, ohne jedoch den Inhalt im wesentlichen zu verändern.

In weiterer Abweichung von dem beschriebenen Ausführungsbeispiel kann es sich bei der gegen Manipulation zu sichernden Information auch um digitalisierte Werte akustischer Signale handeln. Hier wird jeweils einer Gruppe von Abtastwerten des Signals eine Kennzeichnung oder elektronische Unterschrift zugeordnet, wobei jeweils die potentielle Manipulation der Gruppe von Abtastwerten am Empfangsort ermittelt wird. Sind beispielsweise mehrere Abtastwerte in zeitlicher Reihenfolge als potentiell manipuliert ermittelt worden, so kann hieraus auf die Gesamtmanipulation des akustischen Signals bei seiner Übertragung geschlossen werden.

## Patentansprüche

1. Verfahren zum Erfassen einer an einer digitalen Information ausgeübten Manipulation mittels einer Kennzeichnung, mit folgenden Verfahrensschritten:
- Unterteilen der Information in Teilinformationen einer derart gewählten Datenmenge, daß die Wahrscheinlichkeit des Auftretens eines Fehlers bei der beabsichtigten Bearbeitung dieser Teilinformationen kleiner als eine vorbestimmte Wahrscheinlichkeit ist;
- Ableiten je einer Kennzeichnung von jeder Teilinformation;
- Zuordnen der Kennzeichnung zur jeweiligen Teilinformation;
- Bearbeiten der Teilinformationen zusammen mit ihren Kennzeichnungen, wobei eine Manipulation oder ein Bearbeitungsfehler der Teilinformationen auftreten kann;
- Ermitteln von potentiell manipulierten bearbeiteten Teilinformationen aufgrund ihrer Kennzeichnungen; und gekennzeichnet durch folgenden Verfahrensschritt :
- Einstufen der Information als manipuliert, wenn wenigstens zwei zeitlich oder örtlich korrelierte Teilinformationen als potentiell manipuliert ermittelt wurden.

2. Verfahren nach Anspruch 1, mit folgendem Verfahrensschritt nach dem Verfahrensschritt des Ermittelns der potentiell manipulierten Teilinformationen:
- Wiedergeben der als nicht potentiell manipuliert ermittelten und der als potentiell manipuliert ermittelten Teilinformationen in der Weise, daß aus der Wiedergabe die zeitliche oder örtliche Korrelation der als manipuliert ermittelten Teilinformationen erkannt werden kann, um der Bedienungsperson im Falle der zeitlichen oder örtlichen Korrelation der als manipuliert ermittelten Teilinformationen das Erkennen der Gesamtinformation als manipuliert zu ermöglichen.

3. Verfahren nach Anspruch 1 oder 2, bei dem die der Teilinformation zugeordnete Kennzeichnung eine elektronische Unterschrift ist, die aus dem Informationsinhalt der Teilinformation mittels eines Schlüssels abgeleitet wird.

4. Verfahren nach Anspruch 3, bei dem zur Ermittlung einer potentiell manipulierten Teilinformation diese mittels eines weiteren Schlüssels entschlüsselt wird, woraufhin die entschlüsselte Information mit der elektronischen Unterschrift verglichen wird.

5. Verfahren nach einem der Ansprüche 1 bis 4, bei dem zumindest ein Teil der den Teilinformationen zugeordneten Kennzeichnungen ferner eine Hilfskennzeichnung aufweist.

6. Verfahren nach Anspruch 5, bei dem die Hilfskennzeichnung eine zur Teilinformation zugehörige Zeitinformation ist.

7. Verfahren nach Anspruch 5, bei dem die Hilfskennzeichnung eine zur Teilinformation zugehörige Ortsinformation ist.

8. Verfahren nach einem der Ansprüche 1 bis 7, bei dem den Teilinformationen jeweils ein Gewichtungsfaktor zugeordnet wird, der den Grad der zulässigen Fehlerhaftigkeit der Teilinformation angibt, wobei bei Überschreiten dieser Teilinformation-spezifischen Fehlerhaftigkeit diese Teilinformation als potentiell manipuliert eingestuft wird.

## Claims

1. A method for detecting a manipulation performed on digital information by means of an identification, comprising the following steps:
- subdividing the information into information subunits of a data size which is so chosen that the probability of an error occurring during an intended processing of these information subunits is acceptably small;
- deriving a respective identification from each information subunit;
- assigning the identification to the respective information subunit;
- processing the information subunits together with their identifications; and
- determining potentially manipulated information subunits on the basis of their identifications;
characterized by the following step
- classifying the information as manipulated if at least two information subunits which are correlated with respect to time or location have been determined to have been potentially manipulated.

2. A method according to claim 1, comprising the following method step after the method step of determining potentially manipulated information subunits:
- reproducing the information subunits determined not to have been potentially manipulated and the information subunits determined to have been potentially manipulated in such a way that the correlation with respect to time or location of the information subunits determined to have been manipulated can be identified from the reproduction so as to enable the operative to identify the total information as manipulated in the event of correlation with respect to time or location of the information subunits which have been determined to have been manipulated.

3. A method according to claim 1 or 2, wherein the identification assigned to the information subunit is an electronic signature which is derived from the information contents of the information subunit by means of a key.

4. A method according to claim 3, wherein a potentially manipulated information subunit is determined by decoding it by means of an additional key, whereupon the decoded information is compared with the electronic signature.

5. A method according to one of the claims 1 to 4, wherein at least some of the identifications assigned to the information subunits include an auxiliary identification as well.

6. A method according to claim 5, wherein the auxiliary identification is time information associated with the information subunit.

7. A method according to claim 5, wherein the auxiliary identification is location information associated with the information subunit.

8. A method according to one of the claims 1 to 7, wherein a weighting factor which indicates the degree of permissible erroneousness of the information subunit is assigned to each of the respective information subunits, the relevant information subunit being classified as potentially manipulated if the information-subunit-specific erroneousness is exceeded.

## Revendications

1. Procédé pour détecter, à l'aide d'une identification, une manipulation effectuée sur une information numérique, aux étapes de procédé suivantes consistant à :
- subdiviser l'information en informations partielles d'une quantité de données choisie de telle sorte que la probabilité qu'une erreur se produise lors du traitement envisagé de ces informations partielles soit inférieure à une probabilité prédéterminée ;
- dériver chaque fois une identification de chaque information partielle ;
- associer l'identification à l'information partielle correspondante ;
- traiter les informations partielles ensemble avec leurs identifications, une manipulation ou une erreur de traitement des informations partielles pouvant se produire ;
- déterminer, sur base de leurs identifications, des informations partielles traitées potentiellement manipulées ;
caractérisé par l'étape de procédé suivante :
- déterminer que l'information est manipulée lorsqu'au moins deux informations partielles corrélées dans le temps et le lieu ont été déterminées comme étant potentiellement manipulées.

2. Procédé suivant la revendication 1, avec, après l'étape de procédé consistant à déterminer des informations partielles potentiellement manipulées, l'étape de procédé suivante consistant à :
- reproduire les informations partielles déterminées comme n'étant pas potentiellement manipulées et les informations partielles déterminées comme étant potentiellement manipulées de telle sorte que de la reproduction puisse être reconnue la corrélation dans le temps ou le lieu des informations partielles déterminées comme étant manipulées, pour permettre à l'opérateur de reconnaître, dans le cas de la corrélation dans le temps ou le lieu des informations partielles déterminées comme étant manipulées, l'ensemble de l'information comme étant manipulée.

3. Procédé suivant la revendication 1 ou 2, dans lequel l'identification associée à l'information partielle est une signature électronique qui est dérivée, à l'aide d'une clé, du contenu d'information de l'information partielle.

4. Procédé suivant la revendication 3, dans lequel, pour déterminer une information partielle potentiellement manipulée, celle-ci est décryptée à l'aide d'une autre clé, après quoi l'information décryptée est comparée à la signature électronique.

5. Procédé suivant l'une des revendications 1 à 4, dans lequel au moins une partie des identifications associées aux informations partielles présentent, par ailleurs, une identification auxiliaire.

6. Procédé suivant la revendication 5, dans lequel l'identification auxiliaire est une information de temps appartenant à l'information partielle.

7. Procédé suivant la revendication 5, dans lequel l'identification auxiliaire est une information de lieu appartenant à l'information partielle.

8. Procédé suivant l'une des revendications 1 à 7, dans lequel à chacune des informations partielles est associé un facteur de pondération indiquant le degré d'erreur admissible pour l'information partielle, cette information partielle étant, en cas de dépassement de ce degré d'erreur spécifique à l'information partielle, considérée comme étant potentiellement manipulée.
